# EUROPÄISCHE PATENTSCHRIFT

(11) **EP 1 657 047 B1**
(45) Veröffentlichungstag und Bekanntmachung des Hinweises auf die Patenterteilung: **17.12.2008**
(21) Anmeldenummer: 05023612.4
(22) Anmeldetag: 28.10.2005
(51) Int. Cl.: B29C 51/26

(54) **Vorrichtung zum Tiefziehen thermoformbarer Folie**
Apparatus for thermoforming foils
Appareil pour le thermoformage de feuilles

(30) Priorität: 10.11.2004 DE 102004054219
(43) Veröffentlichungstag der Anmeldung: 17.05.2006
(73) Patentinhaber: UHLMANN PAC-SYSTEME GmbH & Co. KG, 88471 Laupheim (DE)
(72) Erfinder: Jürgen Matzenmüller, 88477 Bellamont (DE); Jörg Knüppel, 88477 Schwendi (DE)
(74) Vertreter: Hentrich, Swen

(56) Entgegenhaltungen:
- EP-A- 0 754 508
- WO-A-01/43947
- WO-A-03/092981
- DE-A1- 4 135 935

## Beschreibung

Der Erfindung betrifft eine Vorrichtung zum Tiefziehen thermoformbarer Folie, mit einem oberen Werkzeugteil und einem unteren Werkzeugteil, die relativ zueinander und zu der dazwischen hindurch laufenden Folienebene verstellbar sind, wobei das obere Werkzeugteil aus einer Grundplatte, einer an der Grundplatte fixierten Stempelplatte sowie einer relativ zu der Stempelplatte verstellbar gelagerten Niederhalterplatte gebildet ist, die die Stempelplatte mit ihrem mindestens einen Stempel in einer Plattenöffnung durchgreift.

Aus der WO 01/43947 A1 ist eine derartige Vorrichtung bekannt, mit der mehrschichtige Folien verarbeitet werden, die eine metallische Schicht aufweisen zwecks Abschirmung von Licht oder Feuchtigkeit. Bei derartigen Folien werden in dieser Vorrichtung gezielt die Umformeigegenschaften der metallischen Schicht genutzt, um ohne Heizen die Näpfe auszubilden. Häufig ist jedoch, wie auch in der WO 01/43947 A1 ausgeführt, bei anderen Folientypen eine Erwärmung der Folie erwünscht, da deren Deformierbarkeit größer und die benötigten Umformkräfte kleiner werden, wozu gemäß der DE 41 35 935 A1 Heizplatten eingesetzt werden, die den beiden Hälften des Verformwerkzeuges in Förderrichtung vorgelagert sind.

Bei einer aus der EP 1 297 943 A1 bekannten Vorrichtung kann das untere Werkzeugteil durch eine erste Antriebseinrichtung verstellt werden. In dem oberen Werkzeugteil ist ein Vorstrecker an einer Stange platziert, der ein weiterer Antrieb zugeordnet ist. Schließlich befindet sich in dem oberen Werkzeugteil ein gesonderter Verdichterkolben, der gleichfalls einen eigenen Antrieb aufweist. Bei dieser Vorrichtung wird die zwischen dem oberen Werkzeugteil und dem unteren Werkzeugteil hindurch geführte Folie zunächst durch die Verstellung des unteren Werkzeugteils geklemmt und dann durch die Verstellung des Vorstreckers vorgestreckt, wobei anschließend durch die Verstellung des Verdichterkolbens deren Endverformung bewirkt wird. Durch die Vielzahl unabhängig voneinander zu betätigende Antriebe ist diese Vorrichtung kompliziert und aufwändig und damit kostenträchtig.

Der Erfindung liegt die Aufgabe zugrunde, eine Vorrichtung der eingangs genannten Art so auszubilden, daß eine qualitativ gleichbleibende, hochwertige Verarbeitung der Folie auch bei wechselden Temperaturen sichergestellt ist mit einer genauen Positionierung der Näpfe.

Diese Aufgabe wird nach der Erfindung bei einer Vorrichtung der eingangs genannten Art dadurch gelöst, daß die beheizbare Stempelplatte in der Mitte an der Grundplatte befestigt ist unter Ermöglichung einer zentrischen, thermisch induzierten Längenänderung und zur Führung zwischen der Grundplatte und der Stempelplatte in Führungsaufnahmen eingreifenden Führungsstifte angeordnet sind.

Mit dieser Gestaltung ist der Vorteil verbunden, daß auf einen separaten Stempelantrieb verzichtet werden kann, da die Verstellung der Stempelplatte zusammen mit dem oberen Werkzeugteil erfolgt, da diese ein Teil von dem oberen Werkzeugteil bildet; außerdem bleibt die hohe Positioniergenauigkeit der Stempelplatte erhlaten, auch wenn diese infolge einer Veränderung der Verarbeitungstemperatur der unterschiedlichen Folienarten unterschiedlich erwärmt wird.

Besonders bevorzugt im Rahmen der Erfindung ist weiterhin, wenn ein Stationsrahmen mit einer das obere Werkzeugteil haltenden oberen Traverse und einer das untere Werkzeugteil haltenden unteren Traverse sowie einem Stationsantrieb zur Verstellung der oberen Traverse vorgesehen ist. Dabei zu beachten ist, daß erfindungsgemäße Vorrichtungen in der Regel in Formstationen einer Thermoformmaschine eingesetzt werden, in der in der Regel thermoformbare Kunststofffolien verformt, gefüllt, versiegelt und in einzelne Blisterpackungen ausgestanzt werden. Der bei Formstationen gegebene Stationsantrieb wird bei der vorliegenden Erfindung ausgenutzt, um die obere Traverse zu verstellen, um zur Vorbereitung der Verformung der Kunststofffolie diese mit der Niederhalterplatte festzusetzen und nachfolgend durch die relative Verstellung der Grundplatte mit der Stempelplatte zu der Niederhalterplatte die Verformung der Kunststofffolie durchzuführen. Insbesondere wenn die obere Traverse und die untere Traverse durch Rahmenständer verbunden sind, ergibt sich der weitere Vorteil, daß eine sehr hohe Positioniergenauigkeit erreicht wird durch die hohe Genauigkeit der Stationsführungen. Neben der prinzipiellen Möglichkeit einer starren Anordnung der unteren Traverse mit dem unteren Werkzeugteil ist auch die bevorzugte Möglichkeit realisierbar, daß die untere Traverse auf dem Rahmenständer verstellbar gelagert ist, um so ein permanentes Anliegen der Folie an dem unteren Werkzeugteil zu vermeiden und nur für die Durchführung des Formvorganges sowohl das obere Werkzeugteil als auch das untere Werkzeugteil an die Folie anzulegen.

Es ist gewünscht, daß die Führungsaufnahmen der Stempelplatte und die Führungsstifte der Grundplatte zugeordnet und an den Seitenrändern positioniert sind, um so möglichst große Führungslängen zu erreichen.

Weiterhin ist bei der Erfindung vorgesehen, daß zwischen der Grundplatte und der Stempelplatte thermisch isolierende Distanzplatten angeordnet sind, die bei einer Erwärmung der Stempelplatte verhindern, daß gleichfalls die Grundplatte mit erwärmt werden muß.

Ganz besonders bevorzugt im Rahmen der Erfindung ist weiterhin, wenn an der Niederhalterplatte ein Kühlmittelanschluß angeordnet ist, der dazu dient, die Niederhalterplatte unabhängig von der Stempelplatte temperieren zu können, insbesondere die Folie in den nicht zu verformenden Abschnitten unter die Verformtemperatur abzukühlen. Da die Niederhalterplatte gegenüber der Stempelplatte verstellbar ist, ist ein flexibler Kühlmittelschlauch mit einer Schlaufe an dem Kühlmittelanschluß befestigt, um einen Längenausgleich bereitzustellen.

Eine weitere bevorzugte Ausführungsform der Erfindung ist dadurch gekennzeichnet, daß das untere Werkzeugteil als Kammerplatte mit Formhöfen ausgebildet ist, und daß die Stempelplatte eine der Anzahl der Formhöfe entsprechende Anzahl von Stempel in korrespondierender Anordnung aufweist. Dadurch lassen sich bei einem Formvorgang eine Vielzahl von Näpfen in der Folie ausbilden in einer prinzipiell beliebigen Anordnung, wobei für Änderungen lediglich die Formatteile Kammerplatte, Stempelplatte und Niederhalterplatte auszuwechseln sind, wobei die Positioniergenauigkeit dadurch nicht beeinträchtigt wird, da eine gute Reproduzierbarkeit durch die Festlegung an der oberen Traverse und an der unteren Traverse sowie deren Führung mit der Stationsführung erzielt wird.

Auf der Niederhalterplatte oder der Stempelplatte ist auf der der jeweils anderen zugewandten Seite eine Dichtung angeordnet, die dazu dient, die Stempelplatte nur zur Vorverformung der Folie einzusetzen, um nachfolgend mittels einer in den von der Dichtung begrenzten Raum zwischen der Stempelplatte und der Niederhalterplatte mündenden Druckmittelleitung die Endverformung auszuführen. Dabei ist zu beachten, daß nur ein sehr geringes Kammervolumen vorliegt, so daß Druckänderungen mit wenig Druckmittel bewirkt werden können.

Im Rahmen der Erfindung bietet es sich weiterhin an, wenn die Stempelplatte aus einem wärmeleitenden Material, insbesondere einem Metall, vorzugsweise Aluminium gebildet ist.

Weiterhin ist es im Rahmen der Erfindung bevorzugt, wenn eine Distanzscheibe zur Begrenzung der Verstellung der Stempelplatte gegenüber der Niederhalterplatte vorgesehen ist, um so die Eindringtiefe anpassen zu können, und zwar prinzipiell stufenweise, wenn die Distanzscheibe in unterschiedlichen Dicken bereit gestellt wird.

Als besonders geeignet zu Platzierung der Distanzscheibe hat sich die Führungsaufnahme erwiesen, die leicht zugänglich ist, so daß die Distanzscheibe zur Begrenzung der Eindringtiefe mindestens eines der Führungsstifte in die zugeordnete Führungsaufnahme ausgebildet und angeordnet ist.

Sofern Formatteile Verwendung finden, die für den jeweiligen Einsatzzweck gewechselt weren müssen, bietet es ich an, daß die Distanzscheibe einstückig mit der Grundplatte gebildet ist, um so vielfältige Montage- und Justagearbeiten zu vermeiden, wenn für einen neuen Einsatzzweck die Grundplatte sowieso gewechselt werden muß.

Dann bietet es sich an, daß die Distanzscheibe einen in die Führungsaufnahme ragenden Ringbund der Grundplatte bildet als Anschlag für den Führungsstift.

Im folgenden wird die Erfindung an in der Zeichnung dargestellten Ausführungsbeispielen näher erläutert; es zeigen:
- Fig. 1: die Vorderansicht einer erfindungsgemäßen Vorrichtung vor Beginn eines Formtaktes,
- Fig. 2: eine der Fig. 1 entsprechende Darstellung mit dem an die Folie angelegten oberen Werkzeugteil und unteren Werkzeugteil,
- Fig. 3: eine der Fig. 1 entsprechende Darstellung mit einer gegenüber der Fig. 2 weiter fortgeschrittenen Verstellung der oberen Traverse zur Formung von Näpfen in der Folie,
- Fig. 4: eine perspektivische Darstellung des oberen Werkzeugteils,
- Fig. 5: eine perspektivische Darstellung der isolierten Niederhalterplatte aus dem oberen Werkzeugteil,
- Fig. 6: eine perspektivischen Darstellung der isolierten Stempelplatte aus dem oberen Formwerkzeug,
- Fig. 7: einen Querschnitt durch den Gegenstand der Fig. 4 im zusammengedrückten Zustand des oberen Werkzeugteils,
- Fig. 8: eine Draufsicht auf die Stempelplatte mit den in die Führungsaufnahmen eingreifenden Führungsstiften der Grundplatte,
- Fig. 9: eine schematische Darstellung der zwischen der Niederhalterplatte und der Grundplatte mittels zweier Schlauchschlaufen realisierten Verbindung für den Kühlmittelanschluß mit einer eine Biegebeanspruchung realisierenden Schlauchführung,
- Fig. 10: eine schematische Darstellung der Verbindung des Kühlmittelschlauches zwischen der Niederhalterplatte und der Grundplatte mit einer eine Torsionsbeanspruchung ergebenden Schlauchführung,
- Fig. 11: eine schematische Darstellung zur Realisierung einer statischen Abdichtung zwischen der Niederhalterplatte und der Stempelplatte,
- Fig. 12: eine der Fig. 11 entsprechende Darstellung zur Realisierung einer dynamischen Abdichtung zwischen der Stempelplatte und der Niederhalterplatte,
- Fig. 13: eine perspektivische Darstellung einer weiteren Ausführungsform, und
- Fig. 14: das Detail XIV aus Figur 13.

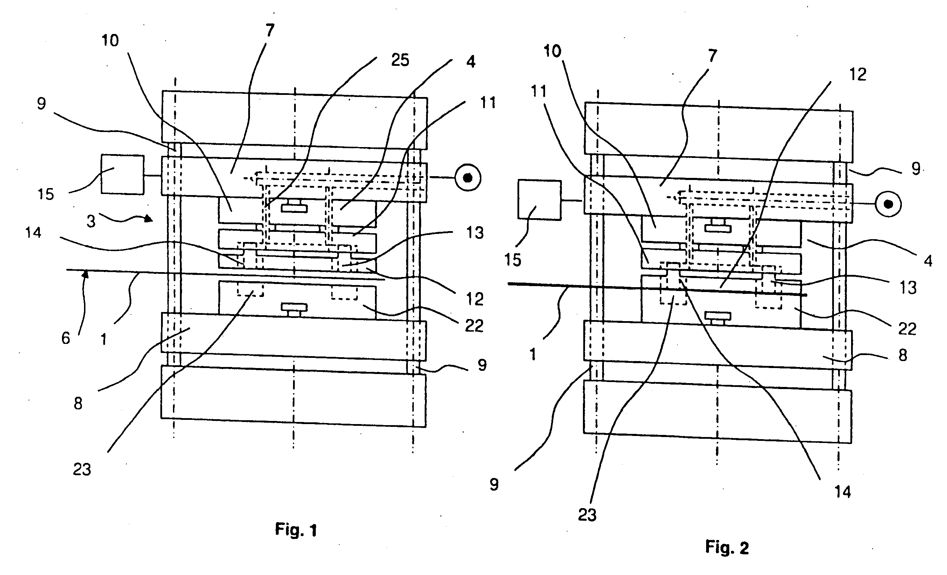

Thermoformmaschinen dienen dazu, diskret in Kapseln, Pillen, Tabletten oder dergleichen portionierte Produkte in Folien 1, insbesondere Kunststofffolien zu verpacken, wozu in der Folie 1 Näpfe 2 ausgebildet werden, die in einer nachfolgenden Füllstation mit den Produkten befüllt und in einer stromab in Folientransportrichtung angeordneten Siegelstation mit einer Deckfolie versiegelt werden. Daran anschließen kann sich noch eine Stanzstation, in der mit den Produkten befüllte und versiegelte Blisterpackungen ausgestanzt werden. Ein wichtiger Bestandteil einer derartigen Thermoformmaschine ist eine Formstation mit einer Vorrichtung 3 zum Tiefziehen thermoformbarer Folie 1, die ein oberes Werkzeugteil 4 und ein unteres Werkzeugteil 5 aufweist, die relativ zueinander und zu der dazwischen laufenden Folienebene 6 verstellbar sind. Wie aus den Figuren 1 bis 3 ersichtlich ist, ist das obere Werkzeugteil 4 an einer oberen Traverse 7 und das untere Werkzeugteil 5 an einer unteren Traverse 8 angeordnet, wobei die obere Traverse 7 und die untere Traverse 8 durch Rahmenständer 9 verbunden sind. Die Verstellung der oberen Traverse 7 und der unteren Traverse 8 erfolgt durch den in der Formstation bereitgestellten Stationsantrieb. Das obere Werkzeugteil 4 ist zusammengesetzt aus einer Grundplatte 10, einer an der Grundplatte 10 fixierten Stempelplatte 11 sowie einer relativ zu der Stempelplatte 11 verstellbar gelagerten Niederhalterplatte 12, die die Stempelplatte 11 mit ihrem mindestens einen Stempel 13 in einer Plattenöffnung 14 durchgreift. Die Stempelplatte 11 besteht aus einem wärmeleitenden Material, für das vorzugsweise Aluminium gewählt ist und ist beheizbar, wie dies durch die in den Figuren 1 bis 3 schematisch angedeutete Heizung 15 mit Heizregelung symbolisiert ist. Da die Stempelplatte 11 über die Grundplatte 10 starr an der oberen Traverse 7 angeschlossen ist, muß innerhalb der Vorrichtung 3 kein flexibles Kabel für eine elektrische Widerstandsheizung bereitgestellt werden, da eine starre Verkabelung sowie Stecker ausreichen.

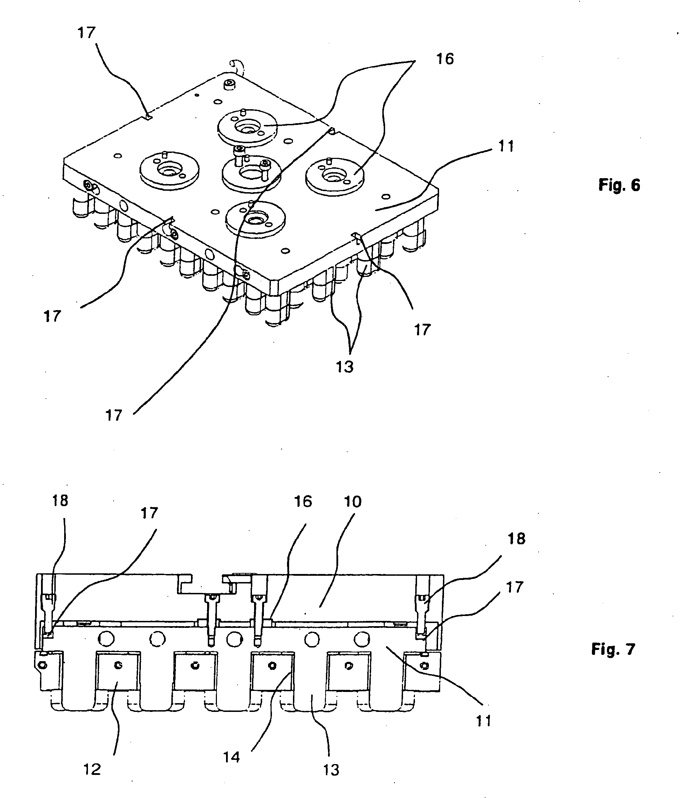

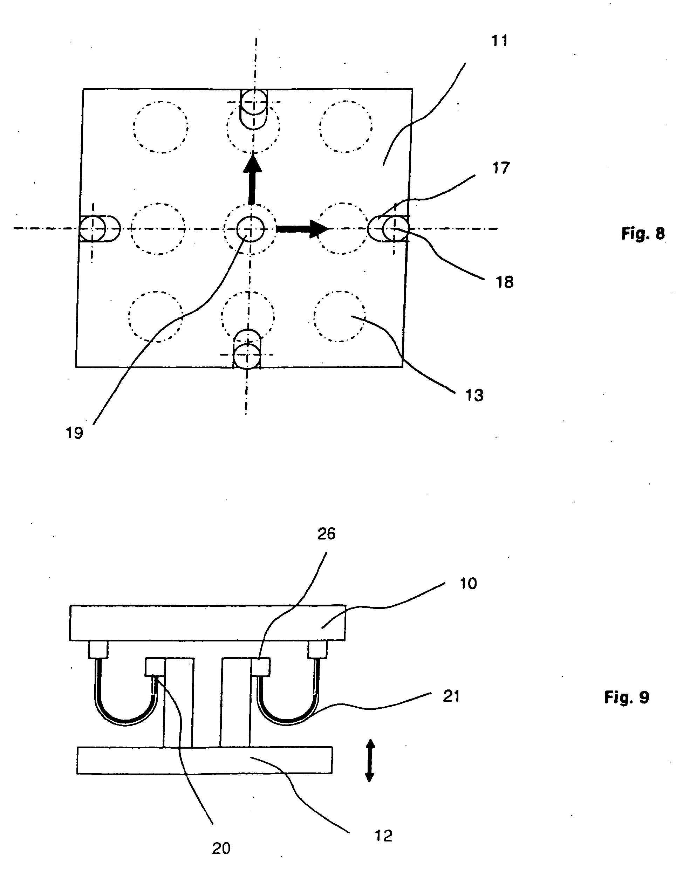

Zwischen der Grundplatte 10 und der Stempelplatte 11 sind Distanzplatten 16 angeordnet (Fig. 6) die thermisch isolierend wirken, um einer Erwärmung der Grundplatte 10 entgegen zu wirken. Die Stempelplatte 11 ist in der Mitte 19 an der Grundplatte 10 befestigt und damit hochgenau über die Grundplatte 10 und über die obere Traverse 7 in dem Stationsrahmen positioniert. Die Befestigung ermöglicht eine zentrische, thermisch induzierte Längenänderung der Stempelplatte 11 (Fig. 8), wozu zur Führung zwischen der Grundplatte 10 und der Stempelplatte 11 in Führungsaufnahmen 17 eingreifende Führungsstifte 18 angeordnet sind. Die Figuren 6 und 7 lassen dabei erkennen, daß die Führungsaufnahmen 17 der Stempelplatte 11 und die Führungsstifte 18 der Grundplatte 10 zugeordnet und an den Seitenrändern positioniert sind.

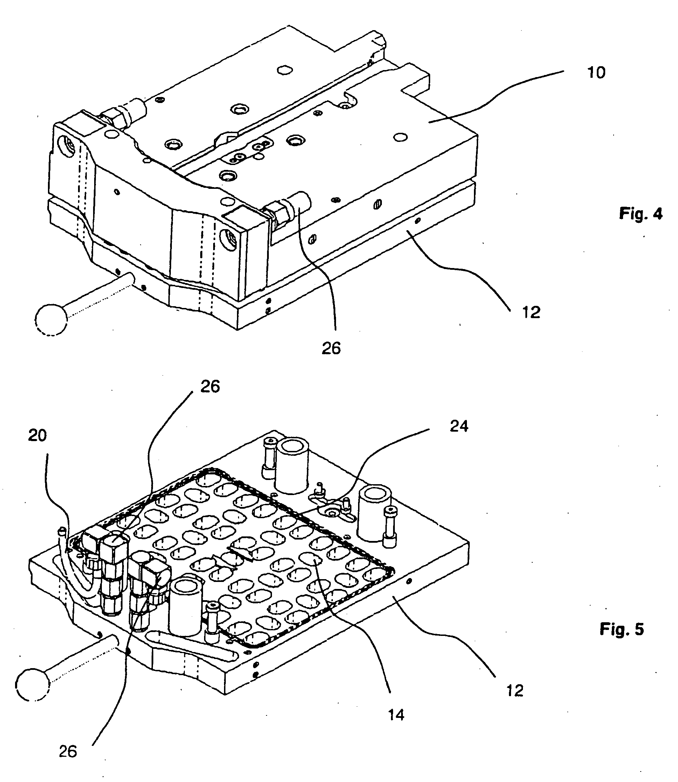

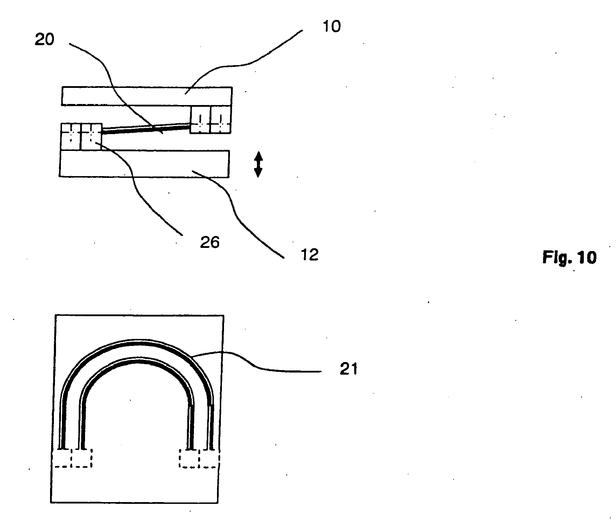

An der Niederhalterplatte 12 ist ein Kühlmittelanschluß 26 angeordnet (Fig. 5), wobei ein flexibler Kühlmittelschlauch 20 mit einer Schlauchschlaufe 21 an dem Kühlmittelanschluß 26 befestigt ist, um die Abstandsänderungen zwischen der Niederhalterplatte 12 und der Grundplatte 10 auszugleichen. Die Figuren 9 und 10 zeigen dabei zwei alternative Schlauchführungen, bei denen zum einen eine Biegebeanspruchung des Kühlmittelschlauches 20 auftritt (Fig. 9), zum anderen eine Torsionsbeanspruchung (Fig. 10).

Das untere Werkzeugteil 5 ist als Kammerplatte 22 mit Formhöfen 23 ausgebildet, wobei die Stempelplatten 11 eine der Anzahl der Formhöfe 23 entsprechende Anzahl von Stempeln 13 in korrespondierender Anordnung aufweist, die eine entsprechende Anzahl von Plattenöffnungen 14 in der Niederhalterplatte 12 durchgreifen.

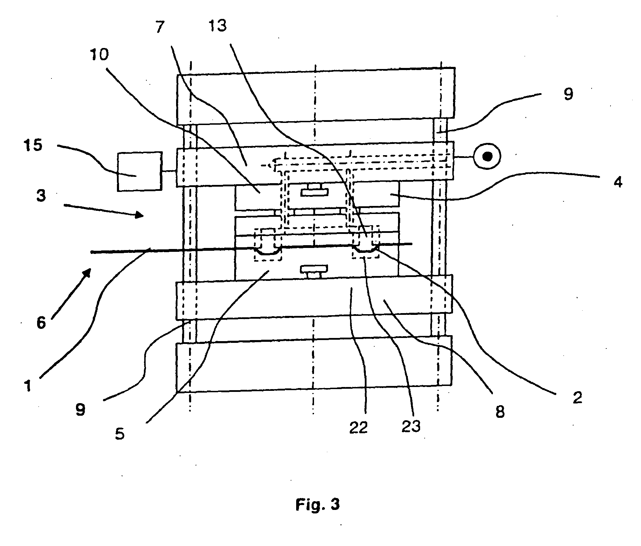

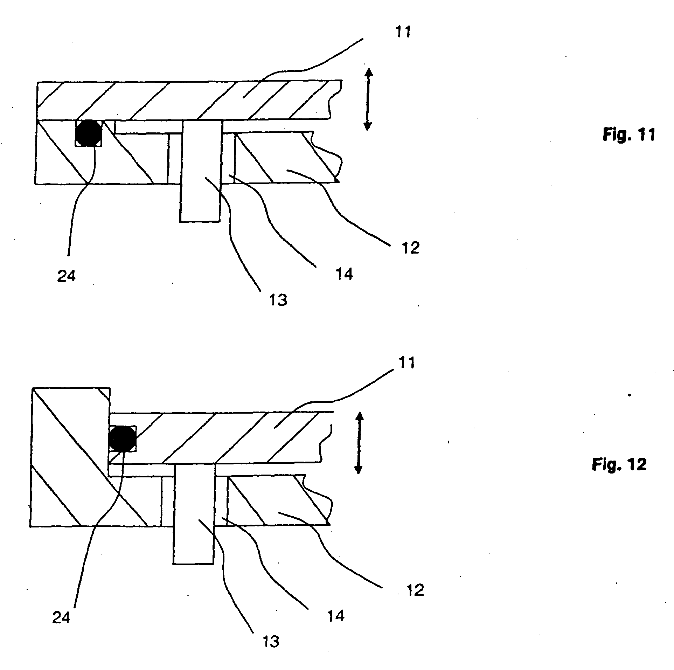

Fig. 5 lässt erkennen, daß auf der Niederhalterplatte 12 auf der der Stempelplatte 11 zugewandten Seite eine Dichtung 24 angeordnet ist, wobei eine Druckmittelleitung 25 in den von der Dichtung 24 begrenzten Raum zwischen der Stempelplatte 11 und der Niederhalterplatte 12 mündet, so daß bei der in Fig. 3 gezeigten Konstellation die Möglichkeit besteht, nach der durch die Stempel 13 bewirkten Vorverformung der Folie 1 eine Endverformung mittels Überdruck durchzuführen. Dabei ist zu beachten, daß nur ein sehr geringes Kammervolumen vorliegt und damit Druckänderungen sehr schnell ausgeführt werden können. Fig. 5 zeigt die Möglichkeit einer statischen Abdichtung zwischen der Stempelplatte 11 und der Niederhalterplatte 12, wie diese auch in Fig. 11 erläutert ist. Alternativ ist auch die Möglichkeit gegeben, eine dynamische Abdichtung gemäß Fig. 12 zu realisieren mit einer entsprechend verschleißfesten Dichtung 24.

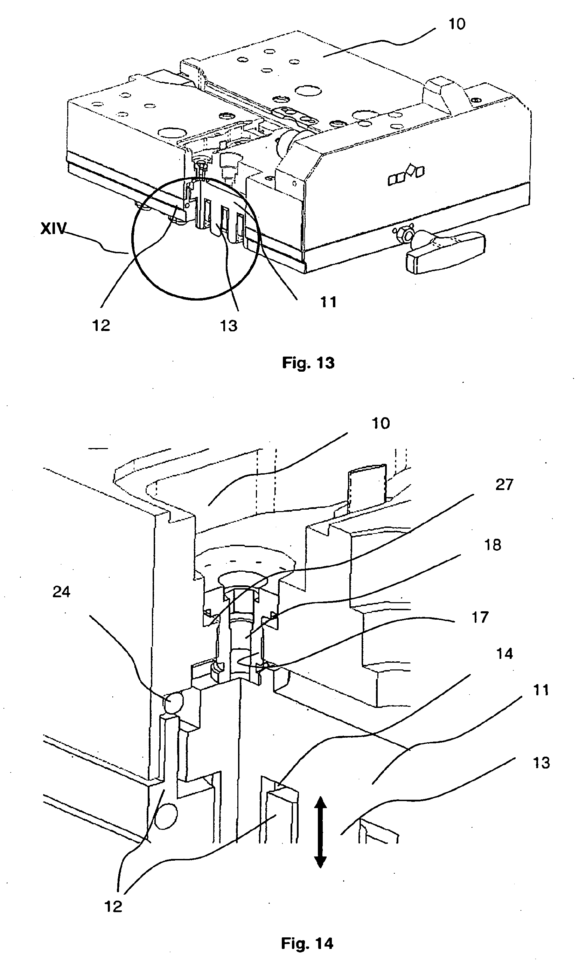

Aus den Figuren 13 und 14 ist erkennbar, daß eine Distanzscheibe 17 zur Begrenzung der Verstellung der Stempelplatte 11 gegenüber der Niederhalterplatte 12 vorgesehen ist, wobei die Distanzscheibe 27 derart angeordnet und ausgebildet ist, daß die Eindringtiefe mindestens eines der Führungsstifte 18 in die zugeordnete Führungsaufnahme 17 begrenzt wird. Bei dem in der Zeichnung dargestellten Ausführungsbeispiel erfolgt dies dadurch, daß die Distanzscheibe 27 einstückig mit der Grundplatte 10 gebildet ist und einen in die Führungsaufnahme 17 ragenden Ringbund der Grundplatte 10 bildet als Anschlag für den Führungsstift 18.

## Patentansprüche

1. Vorrichtung zum Tiefziehen thermoformbarer Folie (1), mit einem oberen Werkzeugteil (4) und einem unteren Werkzeugteil (5), die relativ zueinander und zu der dazwischen hindurch laufenden Folienebene (6) verstellbar sind, wobei das obere Werkzeugteil (4) aus einer Grundplatte (10), einer an der Grundplatte (10) fixierten Stempelplatte (11) sowie einer relativ zu der Stempelplatte (11) verstellbar gelagerten Niederhalteplatte (12) gebildet ist, die die Stempelplatte (11) mit ihrem mindesten einen Stempel (13) in einer Plattenöffnung (14) durchgreift, **dadurch gekennzeichnet, daß** die beheizbare Stempelplatte (11) in der Mitte (19) an der Grundplatte (10) befestigt ist unter Ermöglichung einer zentrischen, thermisch induzierten Längenänderung, und daß zur Führung zwischen der Grundplatte (10) und der Stempelplatte (11) in Führungsäufnahmen (17) eingreifende Führungsstifte (18) angeordnet sind.

2. Vorrichtung nach Anspruch 1, **dadurch gekennzeichnet, daß** ein Stationsrahmen mit einer das obere Werkzeugteil (4) haltenden oberen Traverse (7) und einer das untere Werkzeugteil (5) haltenden unteren Traverse (8) sowie einem Stationsantrieb zur Verstellung der oberen Traverse (7) vorgesehen ist.

3. Vorrichtung nach Anspruch 2, **dadurch gekennzeichnet, daß** die obere Traverse (7) und die untere Traverse (8) durch Rahmenständer (9) verbunden sind.

4. Vorrichtung nach Anspruch 3, **dadurch gekennzeichnet, daß** die untere Traverse (8) auf dem Rahmenständer (9) verstellbar gelagert ist.

5. Vorrichtung nach einem der Ansprüche 1 bis 4, **dadurch gekennzeichnet, daß** die Führungsaufnahmen (17) der Stempelplatte (11) und die Führungsstifte (18) der Grundplatte (10) zugeordnet und an den Seitenrändern positioniert sind.

6. Vorrichtung nach einem der Ansprüche 1 bis 5, **dadurch gekennzeichnet, daß** zwischen der Grundplatte (10) und der Stempelplatte (11) thermisch isolierende Distanzplatten (16) angeordnet sind.

7. Vorrichtung nach einem der Ansprüche 1 bis 6, **dadurch gekennzeichnet, daß** an der Niederhalterplatte (12) ein Kühlmittelanschluß (26) angeordnet ist.

8. Vorrichtung nach Anspruch 7, **dadurch gekennzeichnet, daß** ein flexibler Kühlmittelschlauch (20) mit einer Schlauchschlaufe (21) an dem Kühlmittelanschluß (26) befestigt ist.

9. Vorrichtung nach einem der Ansprüche 1 bis 8, **dadurch gekennzeichnet, daß** das untere Werkzeugteil (5) als Kammerplatte (22) mit Formhöfen (23) ausgebildet ist, und daß die Stempelplatte (11) eine der Anzahl der Formhöfe (23) entsprechende Anzahl von Stempeln (13) in korrespondierender Anordnung aufweist.

10. Vorrichtung nach einem der Ansprüche 1 bis 9, **dadurch gekennzeichnet, daß** auf der Niederhalterplatte (12) oder der Stempelplatte (11) auf der der jeweils anderen zugewandten Seite eine Dichtung (24) angeordnet ist.

11. Vorrichtung nach Anspruch 10, **dadurch gekennzeichnet, daß** eine Druckmittelleitung (25) in den von der Dichtung (24) begrenzten Raum zwischen der Stempelplatte (11) und der Niederhalterplatte (12) mündet.

12. Vorrichtung nach einem der Ansprüche 1 bis 11, **dadurch gekennzeichnet, daß** die Stempelplatte (11) aus einem wärmeleitenden Material, insbesondere einem Metall, vorzugsweise Aluminium gebildet ist.

13. Vorrichtung nach einem der Ansprüche 1 bis 12, **dadurch gekennzeichnet, daß** eine Distanzscheibe (27) zur Begrenzung der Verstellung der Stempelplatte (11) gegenüber der Niederhalterplatte (12) vorgesehen ist.

14. Vorrichtung nach Anspruch 13, **dadurch gekennzeichnet, daß** die Distanzscheibe (27) zur Begrenzung der Eindringtiefe mindestens eines der Führungsstifte (18) in die zugeordnete Führungsaufnahme (17) ausgebildet und angeordnet ist.

15. Vorrichtung nach Anspruch 14, **dadurch gekennzeichnet, daß** die Distanzscheibe (27) einstückig mit der Grundplatte (10) gebildet ist.

16. Vorrichtung nach Anspruch 15, **dadurch gekennzeichnet, daß** die Distanzscheibe (27) einen in die Führungsaufnahme (17) ragenden Ringbund der Grundplatte (10) bildet als Anschlag für den Führungsstift (18).

## Claims

1. Apparatus for deep drawing thermoshapable film (1), comprising an upper tool portion (4) and a lower tool portion (5) which are displaceable relative to each other and relative to the plane (6) of the film passing through between them, wherein the upper tool portion (4) is formed from a base plate (10), a punch plate (11) fixed to the base plate (10), and a hold-down plate (12) which is mounted displaceably relative to the punch plate (11) and which engages through the punch plate (11) with its at least one punch (13) in a plate opening (14), **characterised in that** the heatable punch plate (11) is fixed at the centre (19) to the base plate (10) permitting a central, thermally induced variation in length, and that guide pins (18) engaging into guide receiving means (17) are arranged for guidance between the base plate (10) and the punch plate (11).

2. Apparatus according to claim 1 **characterised in that t**here is provided a station frame having an upper transverse member (7) holding the upper tool portion (4) and a lower transverse member (8) holding the lower tool portion (5) as well as a station drive for displacement of the upper transverse member (7).

3. Apparatus according to claim 2 **characterised in that** the upper transverse member (7) and the lower transverse member (8) are connected by frame stands (9).

4. Apparatus according to claim 3 **characterised in that** the lower transverse member (8) is mounted displaceably on the frame stand (9).

5. Apparatus according to one of claims 1 to 4 **characterised in that** the guide receiving means (17) are associated with the punch plate (11) and the guide pins (18) are associated with the base plate (10) and are positioned at the side edges.

6. Apparatus according to one of claims 1 to 5 **characterised in that** thermally insulating spacer plates (16) are arranged between the base plate (10) and the punch plate (11).

7. Apparatus according to one of claims 1 to 6 **characterised in that** a coolant connection (26) is arranged at the hold-down plate (12).

8. Apparatus according to claim 7 **characterised in that** a flexible coolant hose (20) with a hose loop (21) is fixed to the coolant connection (26).

9. Apparatus according to one of claims 1 to 8 **characterised in that** the lower tool portion (5) is in the form of a chamber plate (22) with shaping cavities (23) and the punch plate (11) has a number of punches (13) corresponding to the number of shaping cavities (23) in a corresponding arrangement.

10. Apparatus according to one of claims 1 to 9 **characterised in that** a seal (24) is arranged on the hold-down plate (12) or the punch plate (11) on the side towards the respective other one.

11. Apparatus according to claim 10 **characterised in that** a pressure fluid conduit (25) opens into the space defined by the seal (24) between the punch plate (11) and the hold-down plate (12).

12. Apparatus according to one of claims 1 to 11 **characterised in that** the punch plate (11) is formed from a heat-conducting material, in particular a metal, preferably aluminium.

13. Apparatus according to one of claims 1 to 12 **characterised in that** there is provided a spacer disc (27) for limiting the displacement of the punch plate (11) with respect to the hold-down plate (12).

14. Apparatus according to claim 13 **characterised in that** the spacer disc (27) is arranged and adapted to limit the depth of penetration of at least one of the guide pins (18) into the associated guide receiving means (17).

15. Apparatus according to claim 14 **characterised in that** the spacer disc (27) is formed integrally with the base plate (10).

16. Apparatus according to claim 15 **characterised in that** the spacer disc (17) forms an annular collar on the base plate (10), that projects into the guide receiving means (17), as an abutment for the guide pin (18).

## Revendications

1. Appareil pour le thermoformage de feuilles (1) par emboutissage profond, au moyen d'un outil comprenant une partie supérieure d'outil (4) et une partie inférieure d'outil (5) mobiles l'une par rapport à l'autre et pouvant se déplacer par rapport au plan (6) de la feuille passant entre eux, la partie supérieure d'outil (4) étant constituée d'un plateau de base (10), d'un plateau matrice (11) fixé sur le précédent et d'un plateau de retenue (12) pouvant se déplacer par rapport au plateau matrice (11) qu'il traverse par son poinçon (13), au nombre d'un au moins, passant dans une ouverture de plateau (14), **caractérisé en ce que** la plateau matrice (11), qui peut être chauffé, est fixé au plateau de base (10) en son milieu (19) avec possibilité d'une variation de longueur centrée induite par la chaleur, des broches de guidage (18) engagées dans des logements de guidage (17) assurant le guidage l'un par rapport à l'autre, du plateau de base (10) et du plateau matrice (11).

2. Appareil selon la revendication 1, **caractérisé en ce qu'**il est prévu un cadre de poste comprenant une traverse supérieure (7) maintenant la partie supérieure d'outil (4) et une traverse inférieure (5) maintenant la partie inférieure (8), ainsi qu'un entraînement de poste pour déplacer la traverse supérieure (7).

3. Appareil selon la revendication 2, **caractérisé en ce que** la traverse supérieure (7) et la traverse inférieure (8) sont reliées par des montants de cadre (9).

4. Appareil selon la revendication 3, **caractérisé en ce que** la traverse inférieure (8) est montée en pouvant se déplacer sur les montants de cadre (9).

5. Appareil selon une des revendications 1 à 4, **caractérisé en ce que** les logements de guidage (17) du plateau matrice (11) et les broches de guidage (18) du plateau de base (10) sont coordonnés et positionnés sur les bords latéraux.

6. Appareil selon une des revendications 1 à 5, **caractérisé en ce que** des plateaux d'espacement (16) thermiquement isolants sont disposés entre le plateau de base (10) et le plateau matrice (11).

7. Appareil selon une des revendications 1 à 6, **caractérisé en ce qu'**un raccordement d'agent de refroidissement (26) est prévu sur le plateau de retenue (12).

8. Appareil selon une des revendications 1 à 7, **caractérisé en ce que** sur le raccordement d'agent de refroidissement (26) est fixé un tuyau d'agent de refroidissement (20), flexible et présentant une boucle de tuyau (21).

9. Appareil selon une des revendications 1 à 8, **caractérisé en ce que** la partie inférieure d'outil (5) est constituée par un plateau à chambres (22) comportant des alvéoles de formage (23), et le plateau matrice (11) présente des poinçons (13) qui correspondent, en nombre et en position, aux bouches de formage (23).

10. Appareil selon une des revendications 1 à 9, **caractérisé en ce qu'**une étanchéité (24) est prévue sur le plateau de retenue (12) ou sur le plateau matrice (11) sur le côté en regard de l'autre.

11. Appareil selon la revendication 10, **caractérisé en ce qu'**une conduite d'agent de pression (25) débouche dans l'espace délimité par l'étanchéité (24) entre le plateau matrice (11) et le plateau de retenue (12).

12. Appareil selon une des revendications 1 à 11, **caractérisé en ce que** le plateau matrice (11) est fait d'un matériau conducteur de la chaleur, notamment un métal, de préférence de l'aluminium.

13. Appareil selon une des revendications 1 à 12, **caractérisé en ce qu'**un disque espaceur (27) est prévu pour limiter le placement du plateau matrice (11) par rapport au plateau de retenue (12).

14. Appareil selon la revendication 13, **caractérisé en ce que** le disque espaceur (27) est conçu et disposé de manière à limiter la profondeur de pénétration d'au moins une des broches de guidage (18) dans le logement de guidage associé (17).

15. Appareil selon la revendication 14, **caractérisé en ce que** le disque espaceur (27) est monobloc avec le plateau de base (10).

16. Appareil selon la revendication 15, **caractérisé en ce que** le disque espaceur (27) constitue une butée pour la broche de guidage (18) sous la forme d'un collet annulaire du plateau de base (10) pénétrant dans le logement de guidage (17).
